# EUROPEAN PATENT APPLICATION

(11) **EP 2 143 521 A1**
(43) Date of publication of application: **13.01.2010**
(21) Application number: 08021331.7
(22) Date of filing: 09.12.2008
(51) Int. Cl.: B23P 19/06, F16B 31/04, F16B 41/00

(54) **A multi jackbolt tensioner including tamper resistant jackbolts**

(30) Priority: 07.07.2008 US 217398
(71) Applicant: Steinbock Machinery Co., Carnegie, PA 15106 (US)
(72) Inventor: Steinbock, Robert C., Bridgeville, PA 15017 (US); Steinbock, Allan T., Pittsburgh, PA 15220 (US)
(74) Representative: Serjeants

(57) **Abstract**

A multi jackbolt tensioner (10) includes a jackbolt tensioner body (12) and jackbolts (22). The jackbolt tensioner body (12) includes a plurality of holes (14) spaced uniformly from a longitudinal central axis (16) at spaced apart locations about an outer periphery thereof, the holes (14) having sidewalls formed with body threads (18). The jackbolts (22) each include jackbolt threads (24) to threadedly engage the body threads (18) in one of the holes (14) in the jackbolt tensioner body (12). The jackbolts (22) further include torque receiving surfaces (32,42,50,60) all disposed about the periphery of each jackbolt (22) in a mutually non-parallel relation to prevent the unauthorized application of torque or stress removal.

## Description

### Field of the invention

The present invention relates generally to a multi jackbolt tensioner. Embodiments of the present invention relate to a tamper resistant construction to prevent unwanted torquing or loosening of jackbolts in a jackbolt tensioner body, and more particularly to providing an unsymmetrical arrangement of torque receiving surfaces on a jackbolt head, preferably housed in a counter bore of the tensioner body.

### Background art

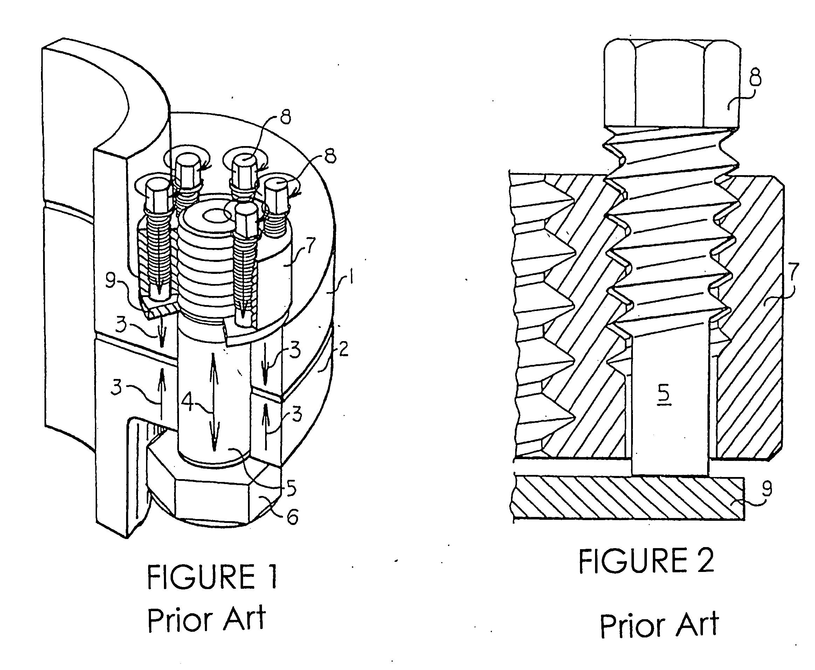

The present invention relates to improvements to the fasteners disclosed in U.S. Patent Nos. RE 33,490 and 6,112,396 which are typically illustrated in Figures 1 and 2. The fastener is used to clamp flanges 1 and 2 under a compression force indicated by arrows 3 which is maintained by stress indicated by arrow 4 in a shank portion 5. The particular fastener illustrated in Figures 1 and 2 has a fastener head 6 at one end of the shank portion 5 and a jackbolt tensioner body 7 threadedly engaged with the shank portion opposite the fastener head 6. Torque applied to jackbolts 8 threadedly engaged about the periphery of the tensioner body 7 develop a very high thrust force against a hardened washer 9. This thrust force and the opposite reaction force on fastener head 6 create a strong clamping force on the flanges.

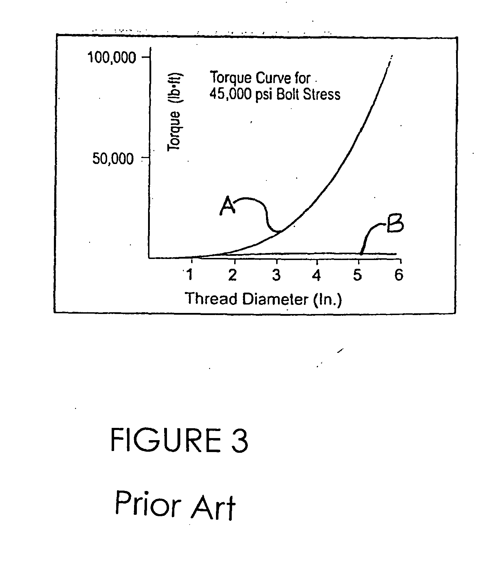

The jackbolts are subject to very high compressive stresses. Compressive stresses in excess of 200,000 psi (approximately 1379 MPa) are routinely permitted for some materials. Figure 3 provides a comparison of the torque required to generate 45,000 psi (approximately 310 MPa) in the shank portion with a threaded diameter up to 6 inches. Curve A illustrates the increase to the necessary torque that must be applied to the nut of a standard bolt fastener. The torque increases in an exponential fashion with an increase in the diameter of the threaded shank portion. Curve B illustrates the necessary torque that must be applied to the jackbolts of the fastener shown in Figures 1 and 2. The required torque is substantially constant with the increase in the diameter of the threaded shank portion.

The use of jackbolts in a jackbolt tensioner body has provided great benefits of reducing the required effort and the requirements for large tools to provide a large moment arm needed to generate the large tensions required for standard type fastener bolts. The use of jackbolts reduces the torque generating requirement to such an extent that hand operated tools can be used, such as standard torque wrenches or small pneumatic powered tools, to generate the required bolt tension. The use of a standard torque wrench also increases the precision and safety for obtaining the desired bolt tension.

Typically, the jackbolt head has six uniformly distributed torque receiving surfaces about the outer periphery of the bolt head. It is also common to use socket head cap screws having a conventional arrangement of six uniformly distributed torque receiving surfaces on a rim section forming a central cavity wherein a hexagon shaped wrench is inserted to torque the jackbolt. All of these bolt head configurations feature parallel torque receiving surfaces uniformly spaced about the periphery of the jackbolt head. An added benefit is realized in the saving of time for the installation and the removal of the fastener.

The use of jackbolts in fasteners has found great utility in many industries and allows, for example, the use for bolting applications in columns forming the frame of large forging presses; high pressure steam turbines; pinion stands; gear reducers; gear boxes; crushing equipment; military equipment; mining equipment; main steam inlet flange, control valve, generator bearing housing all used in nuclear power plants; and commercial Marine namely off shore applications. This has given rise to concerns in the present day society that persons with destructive intent might gain unwanted and unauthorized access to jackbolt tensioners used in strategically important equipment and with little effort and common tools create terrorist catastrophes. Accordingly, a need exists for providing a construction and arrangement of parts to deter and preferably eliminate unauthorized torquing or loosening of jackbolts in a jackbolt tensioner.

Accordingly it is an object of the invention to provide a multi jackbolt tensioner wherein the jackbolts thereof include a tamper resistant torque receiving bolt head.

It is a further object of the present invention to provide a unique construction and arrangement of torque receiving surfaces and parts and parts associated therewith for a multi jackbolt tensioner wherein the torque receiving surfaces are all disposed in a non-parallel relation to prevent the application oftorque or release of stress generated thereby through the use of conventional hand held tools and torque generation implements.

It is another object of the invention to provide a multi jackbolt tensioner wherein the torque receiving surfaces of the jackbolts thereof have bolt heads defined by vertices at the intersect ofn number of unsymmetrical arranged torque receiving surfaces of a polygon, where n is an odd integer.

It is a further object of the present invention to provide a unique construction and arrangement of torque receiving surfaces and parts associated therewith for a multi jackbolt tensioner wherein the torque receiving surfaces are all disposed in counter bored extensions to the threaded bores in a jackbolt tensioner body and further that the torque receiving surfaces are in a non-parallel relation with one another to prevent the application of torque or release of stress generated thereby through the use of conventional hand held tools and torque generation implements.

### Summary of the invention

According to one embodiment of the present invention, there is provided a multi jackbolt tensioner including:
a jackbolt tensioner body including a plurality of holes spaced uniformly from a longitudinal central axis at spaced apart locations about an outer periphery thereof, said holes having sidewalls formed with body threads;
jackbolts each including jackbolt threads to threadedly engage said body threads in one of the holes in said jackbolt tensioner body, said jackbolts further including torque receiving surfaces all disposed about the periphery of each jackbolt in a mutually non-parallel relation to prevent the unauthorized application of torque or stress removal.

According to another embodiment of the present invention, there is provided a multi jackbolt tensioner including:
a jackbolt tensioner body including a plurality of holes spaced uniformly from a longitudinal central axis at spaced apart locations about an outer periphery thereof, said holes having sidewalls formed with body threads;
jackbolts each including jackbolt threads to threadedly engage said body threads in one of the holes in said jackbolt tensioner body, said jackbolts further including a tamper resistant torque receiving jackbolt head comprising vertices at the intersect of n number of unsymmetrical arranged torque receiving surfaces of a polygon, where n is an odd integer.

Optional, but sometimes preferred, features of embodiments of the invention are defined in the dependent claims.

### Brief description of the drawings

The present invention will be more fully understood when the following description is read in light of the accompanying drawings in which:
Figure 1 is an isometric view illustrating a multi jackbolt tensioner of the type known in the art and illustrated in U.S. Patent Nos. RE 33,490 and 6,112,396;
Figure 2 is an elevational view in section illustrating the jackbolt threadedly engaged with a threaded opening in a tensioner body before applying torque to the jackbolt;
Figure 3 is a graph comparing torque requirement for generating bolt stress in a convention bolt fastener and in a fastener using jackbolts;
Figure 4 is an elevational view in section illustrating the tamper resistant jackbolt according to one embodiment of the present invention threadedly engaged with a threaded opening in a tensioner body;
Figure 5 is a view taken along lines V-V of Figure 4;
Figure 6 is an enlarged view of the bolt head and part of the adjoining threaded portion of the tamper resistant jackbolt shown in Figures 4 and 5;
Figure 7 is a sectional view taken along lines VII-VII of Figure 6;
Figure 8 is a sectional view through a socket head bolt head illustrating a pentagon arrangement of torque receiving surfaces;
Figure 9 is a sectional view through a bolt head illustrating an irregular pentagon arrangement of torque receiving surfaces; and
Figure 10 is a sectional view through a bolt head illustrating an arrangement of curvilinear torque receiving surfaces.

### Detailed description of embodiments of the invention

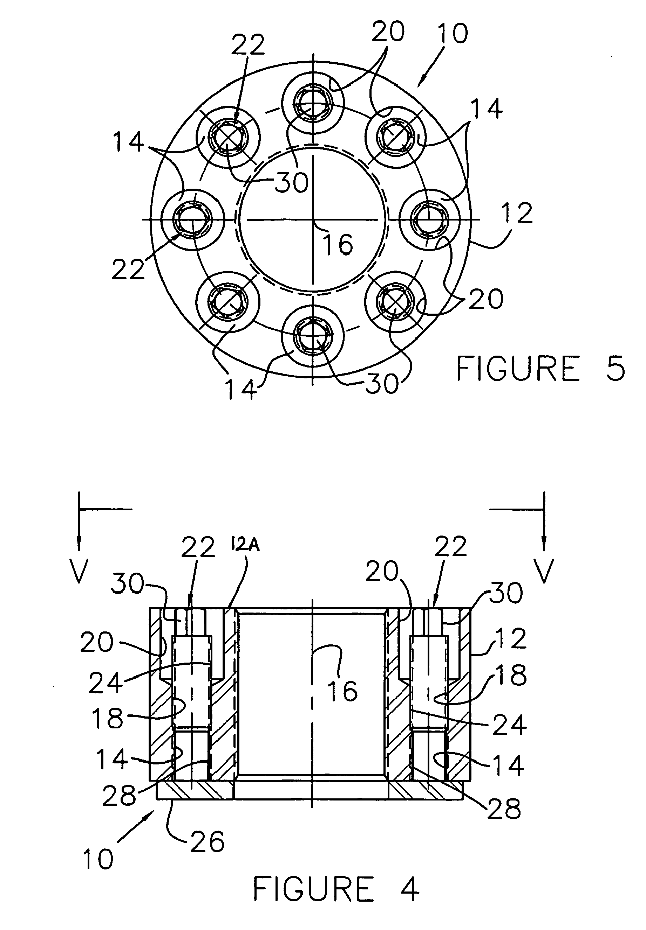

Figures 4 and 5 illustrate a multi jackbolt tensioner 10 including a jackbolt tensioner body 12 having a plurality of holes 14 spaced uniformly from a longitudinal central axis 16 at spaced apart locations about an outer periphery of the jackbolt tensioner body 12. The preferred embodiment of the present invention provides that the holes 14 comprise a first length of sidewall with thread 18 and a second length of sidewall comprising a counter bore 20. The holes 14 are each provided with ajackbolt 22 having a threaded portion 24 engaged with the thread 18. A terminal end portion 28 of each jackbolt 22 extends from the thread portion 24 a distance sufficient to protrude from the jackbolt tensioner body 12 and into engagement with a washer 26 or other stress receiving element of the bolted parts. The terminal end portion 28 can comprise a continuation of the threaded portion 24, if desired.

Figures 4-7, illustrate a jackbolt head 30 of the jackbolt 22 which is constructed according to embodiments of the present invention with torque receiving surfaces 32 all disposed about the periphery of each jackbolt 22 in a mutually non-parallel relation to prevent the unauthorized application of torque or stress removal. Preferably, the torque receiving surfaces 32 will reside in the counter bore 20 below the exposed face surface 12A of the jackbolt tensioner body 12 as the jackbolt 22 advances along the thread 18 until torqued to the desired value.

The diameter of the counter bore 20 is selected to protectively house the torque receiving surfaces 32 and also allow unimpeded entrance of hand held tools or torque generation implements. This arrangement offers the advantage of restricting access to the torque receiving surfaces 32 since the torque receiving surfaces 32 confront the sidewalls formed by the counter bore 20 in the jackbolt tensioner body 12. The depth of the counter bore 20 may exceed the height of the torque receiving surfaces 32 to thereby allow a range of movement of the jackbolts 22 without exposing the torque receiving surfaces 32. It is imperative that the tamper resistant torque receiving surfaces 32 are disposed about the jackbolt head so that there are no mutually parallel torque receiving surfaces to enable the application of an opposed griping force to either apply tension or release stress developed by the jackbolts 22.

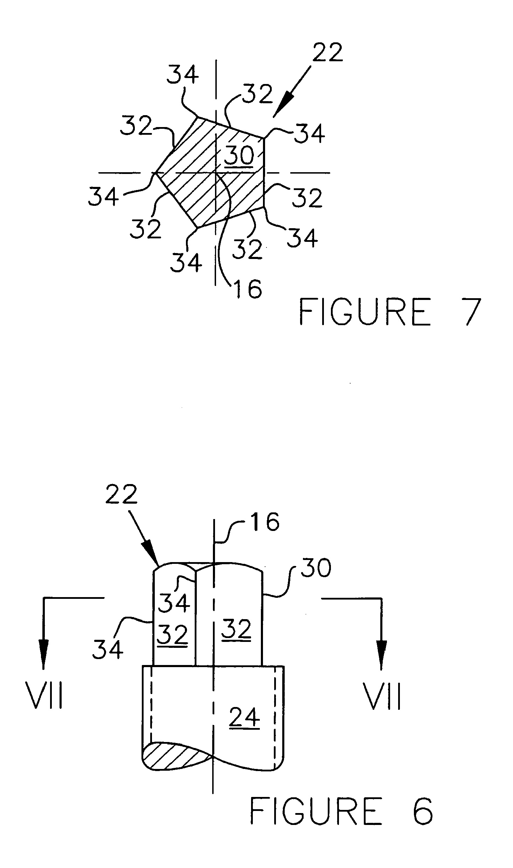

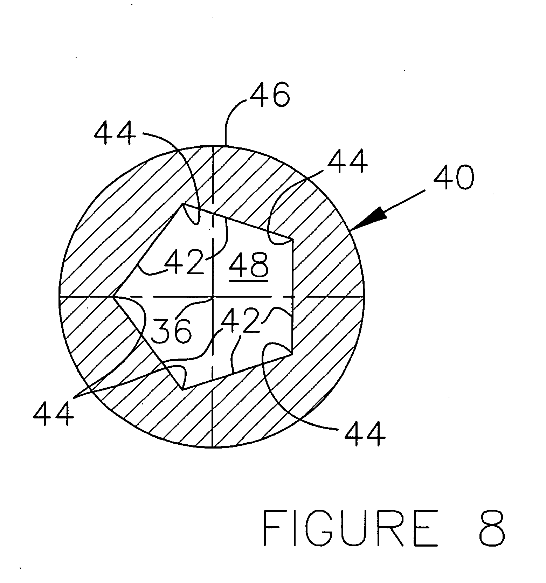

As shown in Figures 6 and 7, the torque receiving surfaces 32 are defined between vertices 34 at the intersect ofn number of unsymmetrical arranged torque receiving surfaces 32 of a polygon; where n is an odd integer. In the embodiments of Figures 4-7 and Figure 8, the integer is 5 thereby defining a pentagon configuration. In Figures 4-7 the vertices 34 are equally spaced from the longitudinal central axis 16. In Figure 8, a section through the socket head 40 is illustrated wherein the torque receiving surfaces 42 are defined between vertices 44 and equally spaced from the longitudinal central axis 36. The surfaces 42 are formed in a rim section 46 and receive torque by inserting a suitably shaped wrench in the socket head cavity 48.

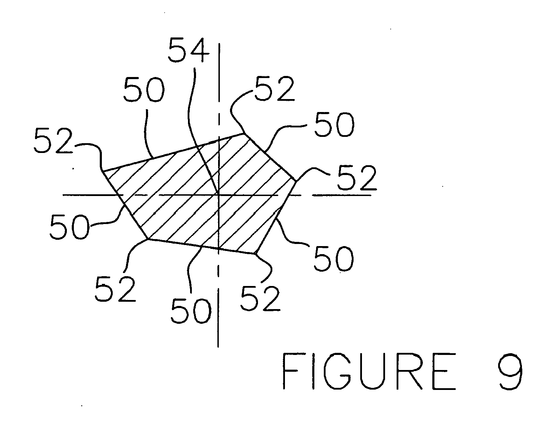

The polygon can be irregular as shown by the sectional view of Figure 9. The irregular configuration of torque receiving surfaces 50 in the polygon is notable by the irregular distancing of the vertices 52 from the longitudinal central axis 54. In addition to the preferred number of five torque receiving surfaces 50, the torque receiving surfaces 50 may belong to the group of polygons where the number of unsymmetrical arranged torque receiving surfaces 50 are, for example, 3, 7, 9 or 11. The number of such torque receiving surfaces 50 is likely to increase the complexity for forming and using the tool or implement to install and remove the jackbolt tensioner.

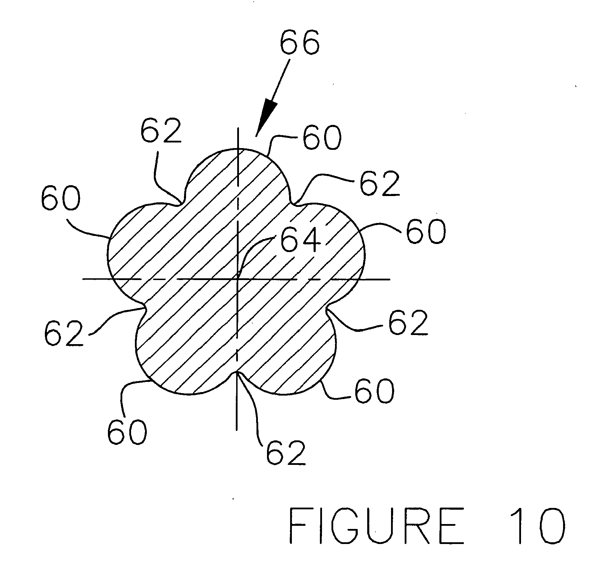

Figure 10 illustrates a further embodiment of the present invention having a distinctive characteristic feature of a plurality of curvilinear torque receiving surfaces 60 separated by adjoining reversely curved filets 62 disposed about the periphery of the head portion of the jackbolts. In Figure 10, the outer periphery is constructed with five curvilinear torque receiving surfaces 60 having the form of circular sectors. Other suitable curvilinear forms include any one or a mixture of: two centered compound curves; three centered compound curves; a hyperbola; and a parabola. The longitudinal central axis 64 demonstrates the non-parallel relation between oppositely directed sites at the outer periphery of the bolt head 66.

While the present invention has been described in connection with the preferred embodiments of the various Figures, it is to be understood that other similar embodiments may be used or modifications and additions may be made to the described embodiments for performing the same function of the present invention without deviating therefrom. Therefore, the present invention should not be limited to any single embodiment, but rather construed in breadth and scope in accordance with the recitation of the appended claims.

## Claims

1. A multi jackbolt tensioner (10) including:
ajackbolt tensioner body (12) including a plurality of holes (14) spaced uniformly from a longitudinal central axis (16) at spaced apart locations about an outer periphery thereof, said holes (14) having sidewalls formed with body threads (18);
jackbolts (22) each including jackbolt threads (24) to threadedly engage said body threads (18) in one of the holes (14) in saidjackbolt tensioner body (12), said jackbolts (22) further including torque receiving surfaces (32, 42, 50, 60) all disposed about the periphery of each jackbolt (22) in a mutually non-parallel relation to prevent the unauthorized application of torque or stress removal.

2. A multi jackbolt tensioner according to claim 1, wherein said torque receiving surfaces confront said sidewalls of said jackbolt tensioner body.

3. A multi jackbolt tensioner according to claim 1 or claim 2, wherein said jackbolt tensioner body is further defined by a counter bore extending to each of said body threads for receiving a torque receiving end of said jackbolts.

4. A multi jackbolt tensioner according to any preceding claim, wherein said jackbolt tensioner body is further defined by a counter bore for receiving a torque receiving end of said jackbolts, said counter bore extending from a face surface of said jackbolt tensioner body to each of said plurality of holes.

5. A multi jackbolt tensioner according to claim 3 or claim 4, wherein said counter bore confronts said torque receiving surfaces in a spaced apart relation.

6. A multi jack bolt tensioner according to any preceding claim, wherein said torque receiving surfaces are curvilinear.

7. A multi jackbolt tensioner according to any preceding claim, wherein said torque receiving surfaces have a curvilinear form selected from the group consisting of circular sectors; two centered compound curves; three centered compound curves; a hyperbola; and a parabola.

8. A multi jackbolt tensioner according to any of claims 1 to 5, wherein said jackbolts further include a tamper resistant torque receiving jackbolt head on which the torque receiving surfaces are provided, the torque receiving surfaces on each jackbolt head being defined by vertices at the intersect of n number of unsymmetrical arranged torque receiving surfaces of a polygon, where n is an odd integer.

9. A multi jackbolt tensioner according to claim 8, wherein said polygon is regular and said odd integer is five.

10. A multi jackbolt tensioner according to claim 8, wherein said polygon is irregular and said odd integer is five.

11. A multi jackbolt tensioner according to any of claims 3 to 10, wherein said torque receiving surfaces are formed in a rim section of the jackbolt and define a cavity for receiving a torque generating tool.

12. A multi jackbolt tensioner (10) including:
a jackbolt tensioner body (12) including a plurality of holes (14) spaced uniformly from a longitudinal central axis (16) at spaced apart locations about an outer periphery thereof, said holes (14) having sidewalls formed with body threads (18);
jackbolts (22) each including jackbolt threads (24) to threadedly engage said body threads (18) in one of the holes (14) in said jackbolt tensioner body (12), said jackbolts (22) further including a tamper resistant torque receiving jackbolt head (30) comprising vertices (34, 44, 52) at the intersect of n number of unsymmetrical arranged torque receiving surfaces (32, 42, 50) of a polygon, where n is an odd integer.

13. A multi jackbolt tensioner according to claim 12, wherein said polygon is regular and said odd integer is five.

14. A multi jackbolt tensioner according to claim 12, wherein said polygon is irregular and said odd integer is five.

15. A multi jackbolt tensioner according to any of claims 12 to 14, wherein the multi jackbolt tensioner is further as defined in any of claims 2 to 5 or 11.
